Europäisches Patentamt

(19) European Patent Office

Office européen des brevets

(11) Veröffentlichungsnummer: **0 064 279**
B1

(12) **EUROPÄISCHE PATENTSCHRIFT**

(45) Veröffentlichungstag der Patentschrift:
10.07.85

(51) Int. Cl.⁴: **C 02 F 11/14,** C 02 F 1/52, C 02 F 1/70

(21) Anmeldenummer: **82103661.3**

(22) Anmeldetag: **29.04.82**

(54) **Verfahren und Vorrichtung zur Behandlung des bei der chemischen Reinigung von Abwässern anfallenden Schlamms.**

(30) Priorität: **02.05.81 DE 3117513**

(43) Veröffentlichungstag der Anmeldung:
**10.11.82 Patentblatt 82/45**

(45) Bekanntmachung des Hinweises auf die Patenterteilung:
**10.07.85 Patentblatt 85/28**

(84) Benannte Vertragsstaaten:
**AT CH FR GB LI NL SE**

(56) Entgegenhaltungen:
**DE - A - 1 517 526**
**DE - A - 2 603 773**
**DE - B - 1 136 285**
**DE - C - 641 793**
**US - A - 3 268 443**
**US - A - 3 377 272**

(73) Patentinhaber: **AGS Ausrüstungsgesellschaft für Gewässer-Schutz-Technik mbH & Co.KG, Provinostrasse 52, D-8900 Augsburg 1 (DE)**

(72) Erfinder: **Käuffer, Karl Clemens, Provinostrasse 52, D-8900 Augsburg (DE)**

(74) Vertreter: **Charrier, Rolf, Dipl.-Ing., Postfach 260 Rehlingenstrasse 8, D-8900 Augsburg 31 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur chemischen Reinigung von Abwasser mittels Eisenhydrogencarbonat, wobei das Eisenhydrogencarbonat in ein wasserunlösliches eisenhaltiges Fällungsmittel überführt wird, dieses zusammen mit dem sich dabei bildenden Schlamm in einer Abtrennstation vom Reinwasser abgetrennt, danach in diesen Schlamm Kohlensäure eingeleitet und das sich dabei bildende Eisenhydrogencarbonat von neuem dem Abwasser zugesetzt wird.

Abwässer, welche NaOH, $Na_2CO_3$ oder $Ca(OH)_2$ enthalten, werden durch Zugabe von Flockungsmitteln wie beispielsweise $FeSO_4$, $FeCl_3$, $Al_2(SO_4)_3$ und $AlCl_3$ unter Einstellen eines zur Fällung optimalen pH-Wertes zwischen 4 und 9 gereinigt. Hierbei entsteht ein Schlamm, bestehend aus organischen Inhaltsstoffen und Metallhydroxiden wie $Fe(OH)_2$, $Fe(OH)_3$, $Al(OH)_3$. Die sich bildenden Neutralsalze $Na_2SO_4$ und NaCl verbleiben als Ionen im gereinigten Wasser. Das gereinigte Wasser wird hierbei mit einer Salzfracht belastet. Der die Metallhydroxyde enthaltende Schlamm muß deponiert werden.

Der DE-C 641 793 ist ein Verfahren der eingangs genannten Art entnehmbar, bei welchem $Fe(OH)_2$ enthaltender Schlamm dem Abwasser zusammen mit Kohlensäure zugesetzt wird, wodurch sich das Eisenhydrogencarbonat bildet. In einem ersten Absetzbecken wird der zugesetzte Schlamm vom Abwasser abgetrennt und einem Reduktionsbecken überführt. Das Abwasser wird sodann belüftet, wodurch sich neuer $Fe(OH)_3$ enthaltender Schlamm bildet, der nach seiner Abtrennung vom Reinwasser ebenfalls dem Reduktionsbecken zugeführt wird. Dort wird das $Fe(OH)_3$ durch Fäulnisreduktion in $Fe(OH)_2$ überführt und dieser Schlamm von neuem dem Abwasser zugesetzt. Hier ist der Nachteil vorhanden, daß der Schlamm im Kreislauf geführt wird und daß er, nachdem er mehrfach im Kreislauf geführt wurde, eisenhaltig ist, wenn er aus dem Reduktionsbecken entfernt wird und daher deponiert werden muß. Letztlich ist die Belüftung des Eisenhydrogencarbonat enthaltenden Abwassers in zweifacher Hinsicht von Nachteil. Hierdurch bildet sich das $Fe(OH)_3$, das durch eine lang dauernde Fäulnisreduktion in $Fe(OH)_2$ überführt werden muß, andererseits werden bei der Belüftung organische Inhaltsstoffe oxidiert, die dann bei der anschließenden Fäulnisreduktion nicht mehr reduzierend wirken.

Nach der DE-A 2 603 773 wird der Schlamm, welcher aus Metallhydroxiden und organischen Inhaltsstoffen besteht, durch Lauge oder Säure behandelt, derart, daß die Metallhydroxide in Metallsalze überführt werden, welche im Kreislauf als Flockungsmittel von neuem Abwässern zugesetzt werden. Wird der Schlamm mit $H_2SO_4$ oder HCl behandelt, entsteht aus dem Eisenhydroxid das Flockungsmittel $FeSO_4$ bzw. $FeCl_3$. Der organische Restschlamm kann dann leicht beispielsweise durch Pyrolyse beseitigt werden. Wird das gereinigte Abwasser im Kreislauf geführt, dann entsteht bei jeder Abwasserreinigung eine neue Salzfracht. Je nach Verwendungszweck setzt dieser Salzgehalt einer Wiederverwendung des gereinigten Abwassers Grenzen.

Es besteht die Aufgabe, die Bildung von $Fe(OH)_3$ weitgehend zu vermeiden und den Schlamm bei nur einmaliger Behandlung von seinen Eisensalzen zu befreien.

Gelöst wird diese Aufgabe bei dem eingangs genannten Verfahren durch die Merkmale des Anspruches 1. Vorteilhafte Ausgestaltungen des Verfahrens und eine Vorrichtung zur Durchführung des Verfahrens sind den Ansprüchen 2—8 entnehmbar.

Handelt es sich um neutrales Abwasser, dem als Flockungsmittel Eisenhydrogencarbonat beigegeben wird, dann wird durch Anlegen von Unterdruck oder durch Strippen mit einem Gas, vorzugsweise mit Luft Kohlendioxid $CO_2$ entfernt, wobei basisches Eisencarbonat $FeCO_3$ ausfällt. Hierbei entsteht keinerlei Salzfracht. Es bildet sich ein Schlamm, bestehend aus organischen Inhaltsstoffen und $FeCO_3$.

Das im Schlamm enthaltene Eisencarbonat $FeCO_3$ wird mit Kohlensäure $H_2CO_3$ behandelt, wobei das Flockungsmittel Eisenhydrogencarbonat $Fe(HCO_3)_2$ entsteht, welches im Kreislauf von neuem Abwasser zugeführt wird. Der verbleibende aus organischen Inhaltsstoffen bestehende Restschlamm kann leicht, beispielsweise durch Pyrolyse beseitigt werden.

Weist das Abwasser nach der Beigabe von Eisenhydrogencarbonat $Na_2CO_3$ und/oder $NaHCO_3$ auf, ist auf einfache Weise in einem Ionenaustauscher eine Entsalzung möglich. Die Natriumionen werden hierbei an den Austauscher gebunden und von der sich bildenden Kohlensäure wird das Kohlendioxid aus dem gereinigten Abwasser ausgetrieben, welches als neutrales Brauchwasser von neuem in den Kreislauf geführt werden kann.

Tritt im Schlamm dreiwertiges Eisen in Form von $Fe(OH)_3$ auf, was nicht ganz vermieden werden kann, wird dieses mit Schwefeldioxid $SO_2$ behandelt. Auf diese Weise bildet sich $FeSO_4$. Dieses $FeSO_4$ wird mit NaOH oder $Na_2CO_3$ behandelt, wodurch das Eisen in $Fe(OH)_2$ oder $FeCO_3$ überführt wird, das, wie vorerwähnt, durch Behandlung mit Kohlensäure $H_2CO_3$ in Eisenhydrogencarbonat $Fe(HCO_3)_2$ überführt werden kann.

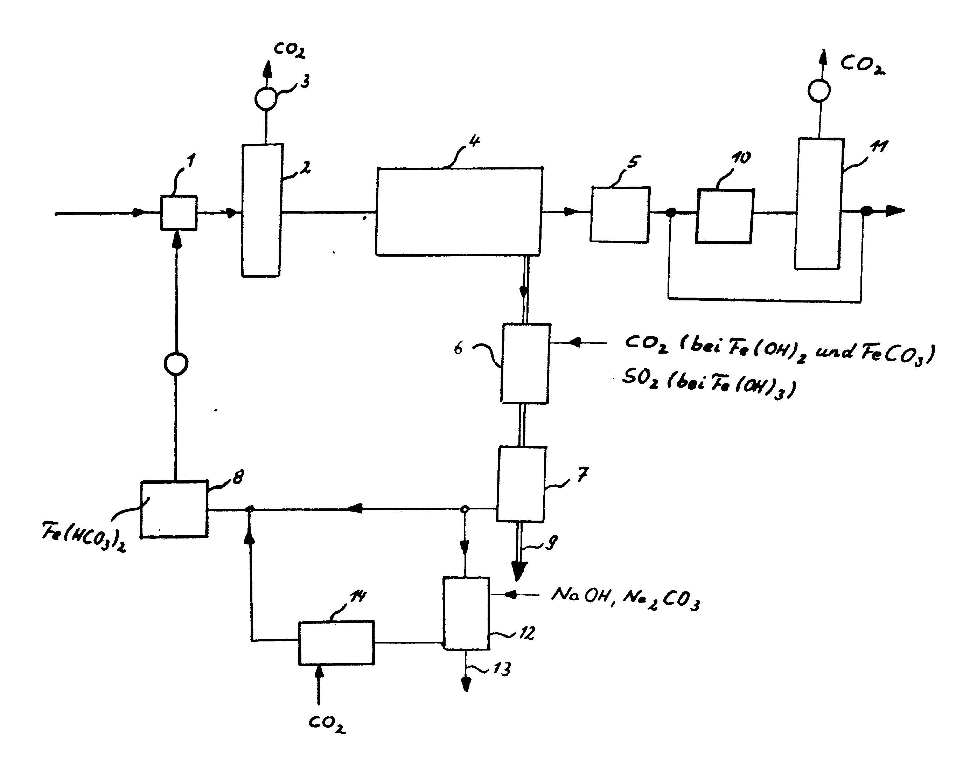

Das Verfahren und seine Ausführungsvarianten werden nachfolgend anhand der Zeichnung erläutert. Das neutrale Abwasser wird in einem Mischer 1 mit Eisenhydrogencarbonat vermischt. Vom Mischer 1 gelangt das Abwasser zu einem Entgaser 2, wo Kohlendioxid entzogen wird. Die Entziehung des Kohlendioxids kann beispielsweise bewirkt werden durch Anlegen eines Unterdrucks, erzeugt durch eine Vakuumpumpe 3. Anschließend gelangt das Abwasser zu einer Flotationsstation 4. Hier findet eine Trennung von Schlamm und Reinwasser statt. Das Reinwasser wird ggf. über einen Filter 5 geführt und ist nunmehr wiederverwendbar.

Der von der Flotationsstation 4 abgezogene Schlamm wird einem Lösungsreaktor 6 zugeführt, wo er mit Kohlendioxid vermischt wird. Hierdurch wird das im Schlamm enthaltene Eisencarbonat in das lösliche Eisenhydrogencarbonat überführt. Dieses Eisenhydrogencarbonat wird in einem Filter 7 abgezogen und gelangt in einen Vorratsbehälter 8, von wo es von neuem dem Mischer 1 zugeführt wird. Der brennbare, aus organischen Inhaltsstoffen bestehende Restschlamm wird vom Filter 7 bei 9 abgezogen.

Weist das Abwasser Natriumsalze auf, wie beispielsweise $Na_2CO_3$ bzw. $NaHCO_3$, dann wird das Reinwasser über den Filter 5 einem Kationenaustauscher 10 zugeführt. An diesem Kationenaustauscher werden die Natriumionen gebunden, während die sich bildende Kohlensäure über einen Entgaser 11 abgezogen wird. Das aus dem Entgaser austretende Abwasser ist somit salzfrei.

Ist im Schlamm, wie er von der Flotationsstation 4 abgezogen wird, dreiwertiges Eisen in Form von $Fe(OH)_3$ vorhanden, dann wird dem Schlamm im Lösungsreaktor 6 Schwefeldioxid zugesetzt. Hierdurch bildet sich das wasserlösliche $FeSO_4$, welches im Filter 7 vom Restschlamm abgetrennt wird, wobei letzterer bei 9 ausgetragen und einer Pyrolyse zugeführt wird. Das $FeSO_4$ wird mit Alkali $NaOH$ oder $Na_2CO_3$ vermischt, wobei dann in einem Filter 12 eine Trennung des löslichen Alkalisulfats und des unlöslichen $Fe(OH)_2$ oder $FeCO_3$ stattfindet. Das Alkalisulfat wird bei 13 ausgetragen, während das $Fe(OH)_2$ bzw. das $FeCO_3$ einem Lösungsreaktor 14 zugeführt wird, wo ihm Kohlendioxid beigemischt wird. Hierdurch bildet sich wiederum Eisenhydrogencarbonat, das dem Vorratsbehälter 8 zugeführt wird.

Das im Entgaser 2 bzw. 11 freiwerdende Kohlendioxid kann ebenfalls im Kreislauf geführt dem Lösungsreaktor 6 bzw. 14 zugeführt werden.

**Patentansprüche**

1. Verfahren zur chemischen Reinigung von Abwasser mittels Eisenhydrogencarbonat, wobei das Eisenhydrogencarbonat in ein wasserunlösliches eisenhaltiges Fällungsmittel überführt wird, welches zusammen mit dem sich dabei bildenden Schlamm in einer Abtrennstation vom Reinwasser abgetrennt, danach in diesen Schlamm Kohlensäure eingeleitet und das sich dabei bildende Eisenhydrogencarbonat von neuem dem Abwasser zugesetzt wird, dadurch gekennzeichnet, daß bei einem neutralen Abwasser dieses vor der Abtrennstation einem Entgaser (2) zugeführt wird, in welchem zur Bildung von Eisenkarbonat als Fällungsmittel Kohlendioxid entzogen wird, der in der Abtrennstation (4) abgetrennte Schlamm einem Lösungsreaktor (6) zugeführt wird, in welchem die Kohlensäure unter Druck in den Schlamm eingeleitet wird und das sich dabei bildende Eisenhydrogencarbonat anschließend vom Restschlamm abgetrennt wird.

2. Verfahren nach Anspruch 1, dadurch gekennzeichnet, daß bei dreiwertigen Eisensalzen enthaltendem Schlamm dieser mit Schwefeldioxid behandelt wird, die sich bildende Lösung vom Restschlamm abgetrennt, mit Natriumcarbonat und/oder Natriumhydroxid vermischt und der sich dabei bildende Niederschlag abgetrennt und durch Einleiten von Kohlensäure in Eisenhydrogencarbonat umgewandelt wird.

3. Verfahren nach Anspruch 1 oder 2, dadurch gekennzeichnet, daß das vom Schlamm abgetrennte Reinwasser einem Kationenaustauscher (10) zugeführt wird, wenn es mit Natriumsalz befrachtet ist und die sich dort bildende Kohlensäure über einen weiteren Entgaser (11) abgezogen wird.

4. Verfahren nach Anspruch 1, dadurch gekennzeichnet, daß als Kohlensäurequelle Rauchgas verwendet wird.

5. Verfahren nach Anspruch 2, dadurch gekennzeichnet, daß das Schwefeldioxid im Lösungsreaktor (6) dem Schlamm zugesetzt wird.

6. Verfahren nach Anspruch 1, dadurch gekennzeichnet, daß im Entgaser (2) das Kohlendioxid durch Anlegen eines Unterdrucks entfernt wird.

7. Vorrichtung zur Durchführung des Verfahrens nach Anspruch 1, dadurch gekennzeichnet, daß der Entgaser (2) aus einem geschlossenen Behälter besteht, der eine Öffnung zur Zufuhr des Abwassers und des Eisenhydrogencarbonats und eine weitere Öffnung zur Entfernung des Kohlendioxids aufweist.

8. Vorrichtung nach Anspruch 7, dadurch gekennzeichnet, daß an die weitere Öffnung eine Vakuumpumpe (3) angeschlossen ist.

**Claims**

1. A process for the chemical purification of waste water by means of iron hydrogen carbonate, where the iron hydrogen carbonate is converted into an iron containing precipitation agent, insoluble in water, which together the sludge which is formed thereby is separated from the purified water in a separating station, after which carbonic acid is introduced into this sludge and the iron hydrogen carbonate which is formed thereby is added afresh to the waste water, characterised in that, when a neutral waste water is involved, this is supplied before the separating station to a degasser (2) in which carbon dioxide is extracted to form iron carbonate as the precipitation agent, the sludge separated out in the separating station (4) is supplied to a solution reactor (6) in which carbonic acid is introduced under pressure into the sludge, and the iron hydrogen carbonate formed thereby is then separated from the residual sludge.

2. A process according to claim 1, characterised in that, if the sludge contains trivalent iron salts, it is treated with sulphur dioxide, the solution which is formed is separated from the residual sludge, mixed with sodium carbonate and/or sodium hydroxide, and the precipitation which is formed thereby is separated out and converted into iron hydrogen carbonate by the introduction of carbonic acid.

3. A process according to claim 1 or 2, characterised in that the purified water separated from the sludge is supplied to a cation exchanger (10) if it is loaded with sodium salt, and the carbonic acid which is formed there is extracted via a further degasser (11).

4. A process according to claim 1, characterised in that flue gas is used as the carbonic acid source.

5. A process according to claim 2, characterised in that the sulphur dioxide is added to the sludge in the solution reactor (6).

6. A process according to claim 1, characterised in that the carbon dioxide is removed by applying low pressure in the degasser (2).

7. Apparatus for carrying out the process according to claim 1, characterised in that the degasser (2) consists of a closed chamber which has an opening for feeding in the waste water and the iron hydrogen carbonate and a further opening for the extraction of the carbon dioxide.

8. Apparatus according to claim 7, characterised in that a vacuum pump (3) is connected to the further opening.


**Revendications**

1. Procédé d'épuration chimique des eaux usées au moyen d'hydrocarbonate de fer, consistant à transformer l'hydrocarbonate de fer en un agent de précipitation contenant du fer et insoluble à l'eau, qui se sépare de l'eau pure en même temps que les boues ainsi produites dans une station de séparation; puis à introduire de l'anhydride carbonique dans ces boues, pour ajouter à nouveau aux eaux usées l'hydrocarbonate de fer ainsi obtenu; le procédé étant caractérisé en ce qu'on opère sur des eaux usées neutres, que l'on fait passer dans un dégazeur (2) avant leur passage dans la station de séparation, pour en extraire le dioxyde de carbone en vue de produire l'hydrocarbonate de fer qui sert d'agent de précipitation; en ce qu'on envoie dans un réacteur de solution (6) les boues recueillies à la station de séparation (4), pour y introduire sous pression l'anhydride carbonique; et en ce qu'on sépare ensuite des boues résiduelles l'hydrocarbonate de fer qui s'est formé ainsi.

2. Procédé selon la revendication 1, caractérisé en ce qu'on opère sur des boues contenant des sels de fer trivalents pour traiter ces boues à l'anhydride sulfureux; en ce qu'on sépare des boues résiduelles la solution ainsi obtenue; en ce qu'on mélange cette solution avec du carbonate de sodium, et/ou avec de l'hydroxyde de sodium; et en ce qu'on sépare les dépôts ainsi obtenus par précipitation pour y introduire de l'anhydride carbonique, afin de les transformer en hydrocarbonate de fer.

3. Procédé selon l'une des revendication 1 ou 2, caractérisé en ce qu'on envoie à un échangeur de cations (10) l'eau pure séparée des boues, alors que cette eau est chargée d'un sel de sodium; et en ce qu'on extrait dans un autre dégazeur (11) l'anhydride carbonique produit dans l'échangeur.

4. Procédé selon la revendication 1, caractérisé en ce qu'on utilise des gaz de combustion comme source d'anhydride carbonique.

5. Procédé selon la revendication 2, caractérisé en ce qu'on ajoute aux boues l'anhydride sulfureux dans le réacteur de solution (6).

6. Procédé selon la revendication 1, caractérisé en ce qu'on récupère l'anhydride carbonique dans le dégazeur (2) en faisant agir un effet de dépression.

7. Dispositif pour réaliser le procédé selon la revendication 1, caractérisé en ce que le dégazeur (2) est constitué par un récipient fermé, qui comporte un orifice pour l'arrivée des eaux usées et de l'hydrocarbonate de fer, et un autre orifice pour l'extraction de l'anhydride carbonique.

8. Dispositif selon la revendication 7, caractérisé en ce qu'une pompe à vide (3) est raccordée à l'autre orifice.